# EUROPEAN PATENT SPECIFICATION

(11) **EP 1 947 355 B1**
(45) Date of publication and mention of the grant of the patent: **27.11.2013**
(21) Application number: 06811194.7
(22) Date of filing: 04.10.2006
(51) Int. Cl.: F16C 33/58, B60B 35/18, F16C 19/18, F16C 43/06

(54) **BEARING DEVICE FOR WHEEL**
LAGERVORRICHTUNG FÜR RAD
DISPOSITIF DE PALIER POUR ROUE

(30) Priority: 27.10.2005 JP 2005312621; 07.11.2005 JP 2005322324
(43) Date of publication of application: 23.07.2008
(73) Proprietor: NTN Corporation, Osaka-shi, Osaka 550-0003 (JP)
(72) Inventor: KOMORI, Kazuo, Iwata-shi, Shizuoka 438-8510 (JP); BABA, Kazuhiro, Iwata-shi, Shizuoka 438-8510 (JP)
(74) Representative: Cohausz & Florack
(86) International application number: PCT/JP2006/319854
(87) International publication number: WO 2007/049437

(56) References cited:
- EP-A1- 1 548 307
- WO-A1-2004/022992
- JP-A- 11 062 985
- JP-A- 63 166 601
- JP-A- 63 166 601
- JP-A- 2000 071 705
- JP-A- 2000 110 839
- JP-A- 2000 110 839
- JP-A- 2000 289 403
- JP-A- 2004 052 784
- JP-A- 2004 052 784
- JP-A- 2004 100 754
- JP-A- 2004 108 449
- JP-A- 2004 108 449
- JP-A- 2005 061 616
- JP-A- 2005 061 616
- JP-A- 2005 140 181
- JP-A- 2005 140 181
- US-A- 5 501 530
- US-A- 5 911 458
- US-A1- 2001 007 600
- US-A1- 2005 111 771
- SKF: 'SKF Explorer Angular Contact BAll Bearings', [Online] 01 January 2003, Retrieved from the Internet: <URL:http://www.skf.com/files/239445.pdf> [retrieved on 2011-04-05]

## Description

### BACKGROUND OF THE INVENTION

### Field of the Invention

The present invention relates to a bearing apparatus for freely rotatably supporting a wheel of vehicle, and more particularly to a bearing apparatus for a wheel of vehicle which can improve the rigidity and life of the bearing apparatus.

### Description of Background Art

In usual, the bearing apparatus for a wheel of vehicle is adapted to freely rotatably support a hub wheel for mounting the wheel via a rolling bearing and it is adopted an inner ring rotation type for a driving wheel and both inner ring rotation and outer ring rotation types for a driven wheel. A double row angular ball bearing is widely used in such a bearing apparatus from reasons that it has a desirable bearing rigidity, high durability against misalignment and small rotation torque required for fuel consumption. The double row angular contact ball bearing has a plurality of balls interposed between a stationary ring and a rotational ring and the balls are contacted with the stationary and rotational rings with being applied a predetermined contact angle.

The bearing apparatus for a wheel of vehicle is broadly classified to a structure of first generation in which a wheel bearing of double row angular contact ball bearing is fitted between a knuckle forming part of a suspension and a hub wheel, a structure of second generation in which a body mounting flange or a wheel mounting flange is directly formed on the outer circumferential surface of an outer member, a structure of third generation in which one of the inner raceway surfaces is directly formed on the outer circumferential surface of the hub wheel, and a structure of fourth generation in which the inner raceway surfaces are directly formed on the outer circumferential surfaces of the hub wheel and the constant velocity universal joint.

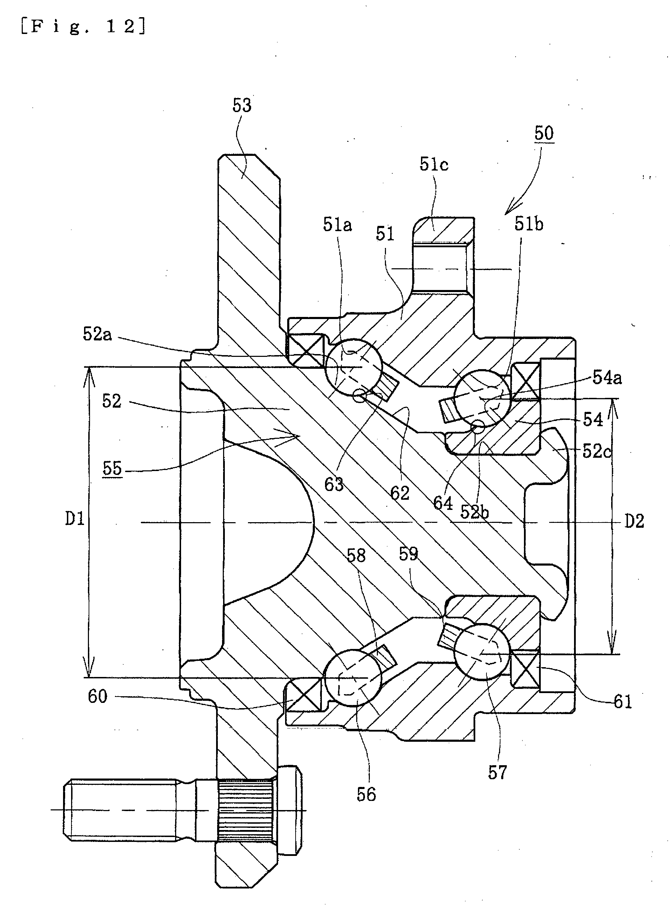

In the wheel bearing apparatus of the prior art since the both bearing row arrangements in double row bearing are same, although it has a sufficient rigidity during the straight way running optimum rigidity cannot always obtained during the curved way running. That is, positional relation between wheels and the bearing apparatus is usually designed so that the weight of a vehicle acts on substantially middle between the rows of bearing balls during the straight way running, but a larger radial load and a larger axial load are applied to axles of vehicle of the side opposite to a curving direction (i.e. axles of the left hand side of vehicle when right hand curving). Accordingly it is effective to have a larger rigidity of the bearing row of outer side than that of the bearing row of inner side in order to improve the durability and strength of the bearing apparatus. Thus it is known a bearing apparatus for a wheel of vehicle shown in Fig. 12 which can have a high rigidity without enlargement of the bearing apparatus.

The bearing apparatus for a wheel of vehicle 50 is formed by a double row angular ball bearing comprising an outer member 51 integrally formed on its outer circumferential surface with a body mounting flange to be mounted on a knuckle (not shown) of a vehicle and on its inner circumferential surface with double row outer raceway surfaces 51a, 51b; an inner member 55 including a hub wheel 52 having a wheel mounting flange 53 integrally formed one end thereof for mounting a wheel (not shown), one inner raceway surface 52a formed on the outer circumferential surface thereof oppositely to one 51a of the double row outer raceway surfaces 51a, 51b, and a cylindrical portion 52b axially extending from the inner raceway surface 52a, and further including an inner ring 54 fitted on the cylindrical portion 52b and formed on its outer circumferential surface with the other inner raceway surface 54a oppositely to the other raceway surface 51b of the double row outer raceway surfaces 51a, 51b; double row balls 56, 57 freely rollably contained between the outer raceway surfaces 51a, 51b and inner raceway surfaces 52a, 54a of the inner member 55, and cages 58, 59 for rollably holding the balls 56, 57.

The inner ring 54 is axially immovably secured by a caulked portion 52c formed by plastically deforming the cylindrical portion 52b of the hub wheel 52 radially outward. Seals 60, 61 are mounted in annular openings formed between the outer member 51 and the inner member 55 to prevent leakage of grease contained within the bearing apparatus and entering of rain water or dusts into the bearing apparatus from the outside.

A pitch circle diameter D1 of the outer side ball group 56 is set larger than a pitch circle diameter D2 of the inner side ball group 57. Accordingly the diameter of the inner raceway surface 52a of the hub wheel 52 is larger than that of the inner raceway surface 54a of the inner ring 54 as well as the outer raceway surface 51a of the outer side of the outer member 51 is larger than that of the outer raceway surface 51b of the inner side of the outer member 51. Also the number of outer side balls 56 is larger than that of the inner side balls 57. By setting that the pitch circle diameter D1 of the outer side is larder than the pitch circle diameter D2 of the inner side (D1>D2), it is possible to obtain a large rigidity of the bearing apparatus 50 and thus to extend the life thereof (see Japanese Laid-open Patent Publication No. 108449/2004).

### SUMMARY OF THE INVENTION

### Disclosure of the Invention

### Problems to be solved by the Invention

In the bearing apparatus 50 of the prior art, a stepped portion 62 of the hub wheel 52 is formed between the inner raceway surface 52a of the outer side and the cylindrical portion 52b on which the inner ring 54 is press fitted. The presence of the stepped portion 62 (height of step: (D1-D2)/2) causes a problem that the balls 56 of the outer side temporary assembled in the outer raceway surface 51a of the outer member 51 by the cage 58 tends to contact the stepped portion 62 and a counter portion 63 of the inner raceway surface 52a of the hub wheel 52 and thus to be damaged by them during assembly of the bearing apparatus 50.

In addition there is also a problem of being caused micro damages on the surface of balls 56, 57 during press fitting of the inner ring 54 in a state wherein the inner side balls 57 are temporary assembled on the inner side outer raceway surface 51b of the outer member 51. That is, the balls 56, 57 would be damaged in this temporary assembling step not only by the contact of them against the counter portion 64 of the inner ring 54 but the contact of balls each other. The damaged surfaces of the balls 56, 57 cause noise in the bearing apparatus and reduce the life of the bearing apparatus. Accordingly very careful assembling work is required and this reduces assembling efficiency of the bearing apparatus.

It is, therefore, an object of the present invention to provide a bearing apparatus for a wheel of vehicle which can solve the antinomic problems of reducing the weight and size of the bearing apparatus and of increasing the rigidity of the bearing apparatus, and also can improve the noise characteristics and the life of the bearing apparatus by preventing generation of damages on balls during assembly of them.

### Means for solving the problems

For achieving the object of the present invention, there is provided a double row angular ball bearing apparatus for a wheel of vehicle comprising an outer member formed on its inner circumferential surface with double row outer raceway surfaces; inner members each formed on its outer circumferential surface with double row inner raceway surfaces oppositely arranged to the double row outer raceway surfaces; and double row ball groups freely rollably contained between the outer raceway surfaces and inner raceway surfaces of the inner members and the outer member ,wherein a pitch circle diameter of a ball group of the outer side is larger than a pitch circle diameter of a ball group of the inner side, characterized in that each of corner portions of the outer circumferential surfaces of the inner member is rounded as a smooth circular arc, and that each of corner portions of counter portions of the outer and inner raceway surfaces is rounded as a smooth circular arc and that a counter portion is formed near the bottom of the inner raceway surface of the hub wheel and has a predetermined width and a diameter larger than that of the bottom of said inner raceway surface. (claim 1).

According to the present invention of claim 1, since the pitch circle diameter of the ball group of the outer side is larger than the pitch circle diameter of the ball group of the inner side, and since each of corner portions of the outer circumferential surfaces of the inner member is rounded as a smooth circular arc, it is possible to provide a wheel bearing apparatus for a wheel of vehicle which can suppress generation of the ball damage during assembly of the bearing apparatus and thus can improve the noise characteristics, the life as well as the rigidity of the bearing apparatus.

According to the present invention of claim 1, each of corner portions of counter portions of the outer and inner raceway surfaces is rounded as a smooth circular arc. This makes it possible to suppress the generation of damaged on the balls during assembly of the bearing apparatus both in a bearing manufacturer and an automobile manufacturer and thus to improve the noise characteristics and the reliability of the bearing apparatus.

It is also preferable that each of corner portions of shoulders of the outer and inner raceway surfaces is rounded as a smooth circular arc (claim 2). This makes it possible to suppress generation of "edge load" even though the oval contacting region rides over shoulders of the raceway surfaces and thus to extend the life of the bearing apparatus.

It is preferable that the outer diameter of each ball is same, and the number of ball group at the outer side is larger than that of a ball group at the inner side (claim 3). This makes it possible to improve both the rigidity and the life of the bearing apparatus.

According to a method of manufacturing a bearing apparatus for a wheel of vehicle, it is preferable that the corner portions respectively of the shoulders and the counter portions are ground simultaneously with the inner and outer raceway surface after heat treatment by a formed grinding wheel (claim 7). This makes it possible to form the shoulders and corner portions smoother.

It is further preferable that the inner member comprises a hub wheel having a wheel mounting formed integrally therewith at one end thereof, one inner raceway surface formed on the outer circumferential surface thereof oppositely to one of the double row outer raceway surfaces, and a cylindrical portion axially extending from the inner raceway surface, and further comprises an inner ring fitted on the cylindrical portion and formed on its outer circumferential surface with the other inner raceway surface oppositely to the other raceway surface of the double row outer raceway surfaces; and wherein a substantially conical recess is formed at an outer side end portion of the hub wheel, and the depth of the recess extends to at least near the bottom of the inner raceway surface of the hub wheel so that the outer side end portion of the hub wheel has a substantially constant wall thickness (claim 9). This makes it possible to simultaneously solve the antinomic problems of reducing the weight and size of the bearing apparatus and of increasing the rigidity of the bearing apparatus.

It is preferable that a shaft shaped portion is formed so that it extends from the bottom of the inner raceway surface of the hub wheel toward the cylindrical portion, and a tapered stepped portion is formed between the shaft shaped portion and a shoulder to which the inner ring is abutted, and wherein the depth of the recess extends to near the stepped portion beyond the bottom of the inner raceway surface (claim 5). This makes it possible to further reduce the weight of the bearing apparatus.

It is further preferable that a ratio (d/PCDi) of the outer diameter (d) of each ball to a pitch circle diameter (PCDi) of a ball group at the inner side is set in a range 0.14 ≤ (d/PCDi) ≤ 0.25 (claim 6). This makes it possible to satisfy both the high rigidity and the long life of the bearing apparatus.

### Effects of the Invention

According to the double row angular ball bearing apparatus for a wheel of vehicle of the present invention since it comprises an outer member formed on its inner circumferential surface with double row outer raceway surfaces; inner members each formed on its outer circumferential surface with double row inner raceway surfaces oppositely arranged to the double row outer raceway surfaces; and double row ball groups freely rollably contained between the outer raceway surfaces and inner raceway surfaces of the inner members and the outer member ,wherein a pitch circle diameter of a ball group of the outer side is larger than a pitch circle diameter of a ball group of the inner side, characterized in that each of corner portions of the outer circumferential surfaces of the inner member is rounded as a smooth circular arc, and that each of corner portions of counter portions of the outer and inner raceway surfaces is rounded as a smooth circular arc, it is possible to provide a wheel bearing apparatus for a wheel of vehicle which can suppress generation of the ball damage during assembly of the bearing apparatus and thus can improve the noise characteristics, the life as well as the rigidity of the bearing apparatus.

### Best mode for carrying out the Invention

The best mode for carrying out the present invention is a double row angular ball bearing apparatus for a wheel of vehicle comprising an outer member formed on its inner circumferential surface with double row outer raceway surfaces; an inner member including a hub wheel having a wheel mounting flange formed integrally therewith at one end thereof, one inner raceway surface formed on the outer circumferential surface thereof oppositely to one of the double row outer raceway surfaces, and a cylindrical portion axially extending from the inner raceway surface, and including an inner ring fitted on the cylindrical portion and formed on its outer circumferential surface with the other inner raceway surface opposite to the other outer raceway surface of the double row outer raceway surfaces; and double row ball groups freely rollably contained between the outer raceway surfaces and inner raceway surfaces of the inner members and the outer member ,wherein a pitch circle diameter of a ball group of the outer side is larger than a pitch circle diameter of a ball group of the inner side, characterized in that each of corner portions of the outer circumferential surfaces of the inner member is rounded as a smooth circular arc and that each of corner portions of counter portions of the outer and inner raceway surfaces is rounded as a smooth circular arc.

### DESCRIPTION OF THE PREFERRED EMBODIMENTS

### First embodiment

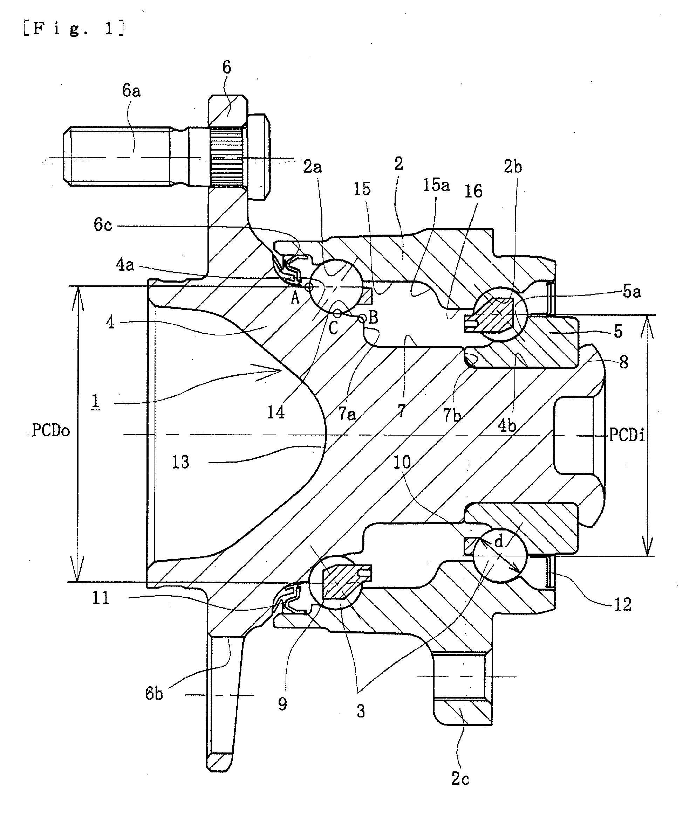

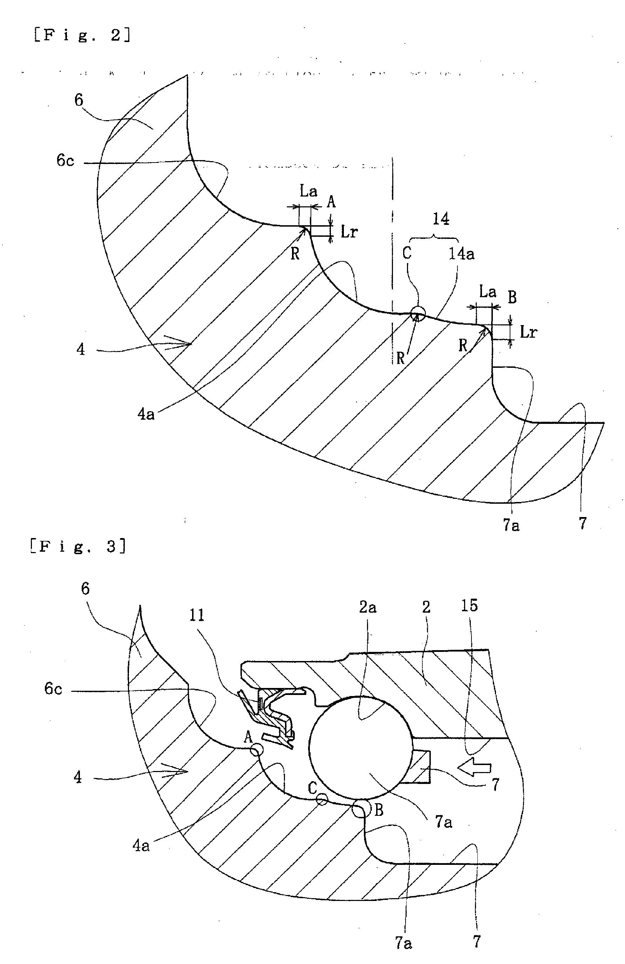

Preferable embodiments of the present invention will be hereinafter described with reference to the drawings. Fig. 1 is a longitudinal section view showing a first embodiment of the bearing apparatus for a wheel of vehicle of the present invention, Fig. 2 is an enlarged sectional view of the hub wheel of Fig. 1, and Fig. 3 is an enlarged sectional view of a condition during assembly of the inner side ball group onto the inner raceway surfaces of the hub wheel. In the description below, a term "outer side" (left hand side in the drawings) of the apparatus denotes a side which is positioned outside of the vehicle body and a term "inner side" (right hand side in the drawings) of the apparatus denotes a side which is positioned inside of the body when the bearing apparatus is mounted on the vehicle body.

The bearing apparatus for a wheel of vehicle of the present invention shown in Fig. 1 is a third generation type used for a driven wheel and comprises an inner member 1, an outer member 2, and double rows of balls (ball groups) 3, 3 for rollably contained between the inner and outer members 1, 2. The inner member comprises the hub wheel 4 and an inner ring 5 press fitted on the hub wheel with a predetermined interference.

The hub wheel 4 is integrally formed with a wheel mounting flange 6 at its one end, one (outer side) inner raceway surface 4a on the outer circumferential surface, and a cylindrical portion 4b extending from the inner raceway surface 4a through a shaft shaped portion 7. Hub bolts 6a are arranged on the wheel mounting flange 6 equidistantly along the periphery of the wheel mounting flange 6 and circular apertures 6b are formed between the hub bolts 6a. These circular apertures 6b contribute not only to reduction of the weight of the bearing apparatus but to passage of any fastening tool used for assembly and disassembly of the bearing apparatus.

The inner ring 5 is formed on its outer circumferential surface with the other (inner side) inner raceway surface 5a and adapted to be press fitted on the cylindrical portion 4b of the hub wheel 4 with a predetermined interference and to be axially secured by a caulked portion 8 formed by plastically deforming the end of the cylindrical portion 4b.

The hub wheel 4 is made of medium carbon steel including carbon of 0.40-80% by weight such as S53C and hardened by high frequency induction quenching so that a region including the inner raceway surface 4a from the inner side base 6c of the wheel mounting flange 6 to the cylindrical portion 4b has surface hardness of 58-64 HRC. The caulked portion 8 is remained as its surface hardness after forging. Accordingly the wheel mounting flange 6 has a sufficient mechanical strength against the rotary bending load applied thereto and the anti-fretting strength of the cylindrical portion 4b at a region press fitted by the inner ring 5 can be improved and the plastically deforming working of the caulked portion 8 can be also carried out without any micro crack during caulking process. The inner ring 5 and the balls 3 are made of high carbon chrome bearing such as SUJ 2 and hardened to their core by dipping quenching as having hardness of 58~&4 HRC.

The outer member 2 is integrally formed on its outer circumferential surface with a body mounting flange 2c to be mounted on a knuckle (not shown) of a vehicle and on its inner circumferential surface with an outer side outer raceway surface 2a opposite to the inner raceway surface 4a of the hub wheel 4 and an inner side outer raceway surface 2b opposite to the inner raceway surface 5a of the inner ring 5. Double rows of balls 3, 3 are contained between these outer and inner raceway surfaces and rollably held by cages 9, 10. The outer member 2 is made of medium carbon steel including carbon of 0.40~0.80% by weight such as S53C and the double row outer raceway surfaces 2a, 2b are hardened by high frequency induction quenching so as to have a surface hardness of 58-64 HRC. A seal 11 is mounted within an outer side end portion of an annular space formed between the outer member 2 and the inner member 1 and a magnetic encoder 12 is mounted within an inner side end of the annular space for detecting the rotational speed of wheel. The seal 11 and a cap (not shown) covering the opened end of the outer member 2 prevent leakage of grease contained in the bearing and entering of rain water and dusts into the bearing from outside. Although the structure shown here is that of third generation bearing, the bearing apparatus of the present invention can be applied to the structures of bearing of the first, second and fourth generation.

As shown in Fig. 1 a pitch circle diameter PCDo of the outer side ball group 3 is set larger than a pitch circle diameter PCDi of the inner side ball group 3 (PCDo>PCDi). The diameter "d" of each ball 3 is same both in the outer side and inner side and thus the number of the ball group 3 in the outer side is larger than that of the ball group 3 in the inner side because of the fact PCDo>PCDi.

A substantially conical recess 13 is formed at an outer side end portion of the hub wheel 4 in order to reduce the weight of the bearing apparatus and the depth of the recess 13 extends to near the bottom of the inner raceway surface 4a of the hub wheel 4 so that outer side end portion of the hub wheel 4 has a substantially constant wall thickness. As clearly shown in Fig. 1 the outline configuration of the hub wheel 4 is gradually reduced from the inner raceway surface 4a to the cylindrical portion 4b via the counter portion 14, a stepped portion 7a, the shaft shaped portion having a smaller diameter, and a shoulder portion 7b to which the inner ring 5 is abutted. Due to the fact PCDo>PCDi, the diameter of the inner raceway surface 4a of the hub wheel 4 is larger than that of the inner raceway surface 5a of the inner ring 5 and the outer diameter of the shaft shaped portion 7 is set so that it has substantially same diameter as the bottom diameter of the inner raceway surface 5a of the inner ring 5.

On the other hand, in the outer member 2, due to the fact PCDo>PCDi, the diameter of the outer side outer raceway surface 2a is larger than that of the inner side outer raceway surface 2b. The outer side outer raceway surface 2a continues to the inner side outer raceway surface 2b via a cylindrical shoulder 15, a stepped portion 15a and a shoulder 16 of a smaller diameter. The inner diameter of the bottom of the outer raceway surface 2b is set so that it has substantially same diameter as the inner diameter of the shoulder 15 of a larger diameter.

In the bearing apparatus for a wheel of vehicle having such a structure, since the pitch circle diameter PCDo of the outer side ball group 3 is larger than the pitch circle diameter PCDi of the inner side ball group 3 and the number of the outer side ball group 3 is also larger than that of the inner side ball group 3, the rigidity of the bearing apparatus at the outer side can be increased and thus the life of the bearing apparatus can be extended. In addition a recess 13 is formed at the outer side end portion of the hub wheel 4 so that the wall thickness of the hub wheel 4 at this outer side end portion is substantially constant. This enables to solve the antinomic problems of reducing the weight and size of the bearing apparatus and of increasing the rigidity of the bearing apparatus.

In addition to increase of the bearing rigidity at the outer side, a ratio of the diameter "d" of each ball 3 to the pitch circle diameter PCDi of the inner side ball group 3 (d/PCDi) is set in a predetermined range i.e. 0.14≤(d/PCDi)≤0.25.

In view of the bearing rigidity a smaller diameter "d" of each ball 3 is preferable since a larger number of balls 3 (i.e. a smaller diameter "d") can increase the bearing rigidity in a same pitch circle diameter PCDi. However in view of the life of the bearing apparatus a larger diameter "d" of ball 3 is preferable since the larger diameter "d" of ball 3 reduces the rolling fatigue strength. As a result of the FEM analysis (analysis using an electrolytic electron microscope) of a relation between the pitch circle diameter PCDi and the diameter "d" of ball 3, it has been found that the bearing rigidity cannot be increased when d/PCDi exceeds 0.25, and on the contrary the rolling fatigue strength is lowered when d/PCDi is less than 0.14. Accordingly it is possible to satisfy both the increase of the rigidity and extension of the bearing life by setting the ratio d/PCDi in the range 0.14≤(d/PCDi)≤0.25 in addition to setting the pitch circle diameter PCDo of the outer side ball group 3 larger than the pitch circle diameter PCDi of the inner side ball group 3.

In this embodiment each corner portion on the outer circumferential surface of the hub wheel 4 is rounded as having a smooth circular arc. That is, as shown in an enlarged view of Figs. 2, a corner (transition) A between the base portion (shoulder) 6c and the inner raceway surface 4a, and a corner B of the stepped portion 7a are formed as having a predetermined chamfered configuration having a corner radius R. More particularly the corner A is formed so that it has the axial chamfer dimension La of 0.1.5~0.8 mm, preferably 0.15~0.3 mm, and the radial chamfer dimension Lr of 0.15~0.8 mm, preferably 0.15~0.3 mm, and the corner radius R of 0.15~2.0 R, preferably 0.45~0.7 R in order to have smooth transition portions. When the corner radius R is less than 0.15 R balls 3 would tend to be scratched, on the other hand when the corner radius R exceeds 2.0 R the oval contact region of ball 3 (i.e. oval region formed by an contact area between the ball 3 and the inner raceway surface 4a) would tend to ride over the inner raceway surface 4a and come out from the inner raceway surface 4a. Similarly the corner B is formed so that it has the axial chamfer dimension La and the radial chamfer dimension Lr of 0.5~5 mm, and the corner radius R of 1.0~10 R and thus has a smooth transition portion.

In addition a counter portion 14 is formed near the bottom of the inner raceway surface 4a as having a predetermined width and a diameter larger than that of the bottom of the inner raceway surface 4a. The counter portion 14 comprises a corner portion C near the bottom of the inner raceway surface 4a, and a smaller diameter portion 14a formed by a circular arc surface having a predetermined radius of curvature. The stepped portion 7a is formed adjacent to the smaller diameter portion 14a via a corner B. The corner C of the counter portion 14 is also formed as a smooth circular arc having a corner radius R of 1.0~5 R.

Since the corner portions A, B. C on the outer circumferential surface of the hub wheel 4 are rounded, it is possible to suppress generation of damages on the balls 3 during assembling step of the bearing apparatus as shown in Fig. 3 although the outer side balls 3 would contact the corners A, B, C of the hub wheel 4 and thus to improve the noise characteristics and the life of the bearing apparatus.

In addition it is possible to prevent the lip of seal 11 from being contacted with the corner A and thus to improve the reliability of sealing quality. It is also possible to suppress generation of "edge load" even though the oval contacting region rides over the corner A when a large bending moment is applied to the wheel bearing apparatus. The term "edge load" herein means a large concentrated stress generated in the corners and often causes premature delamination of parts.

The corners A, C are ground by the formed grinding wheel simultaneously with the inner raceway surface 4a after heat treatment thereof and the corner B of the stepped portion 7a is formed as a rounded circular arc e.g. by a bite. This enables to prevent generation of burrs and thus to form the outer diameter of the counter portion 14 with a high accuracy. According to this embodiment not only the inner raceway surface 4a of the hub wheel 4 but the shoulder 5b of the inner raceway surface 5a of the inner ring 5, shoulders 15, 16 of the outer raceway surfaces 2a, 2b of the outer member 2 and their counter portions are rounded and formed as smooth circular arcs. This enables to prevent generation of ball damages during assembly of the bearing apparatus and to prevent generation of "edge load" even though the oval contacting region rides over the corners.

### Second embodiment

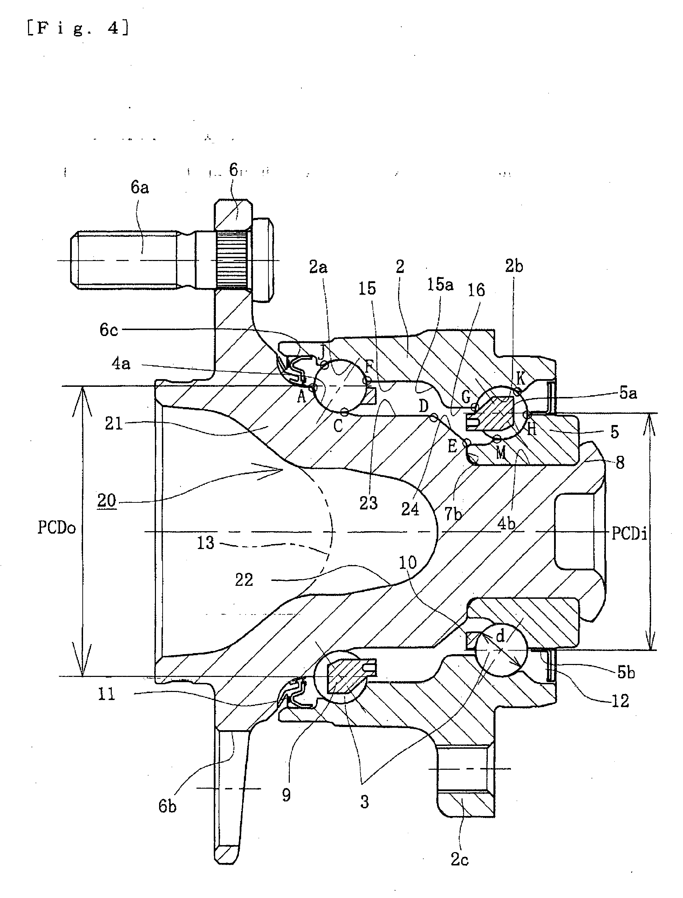

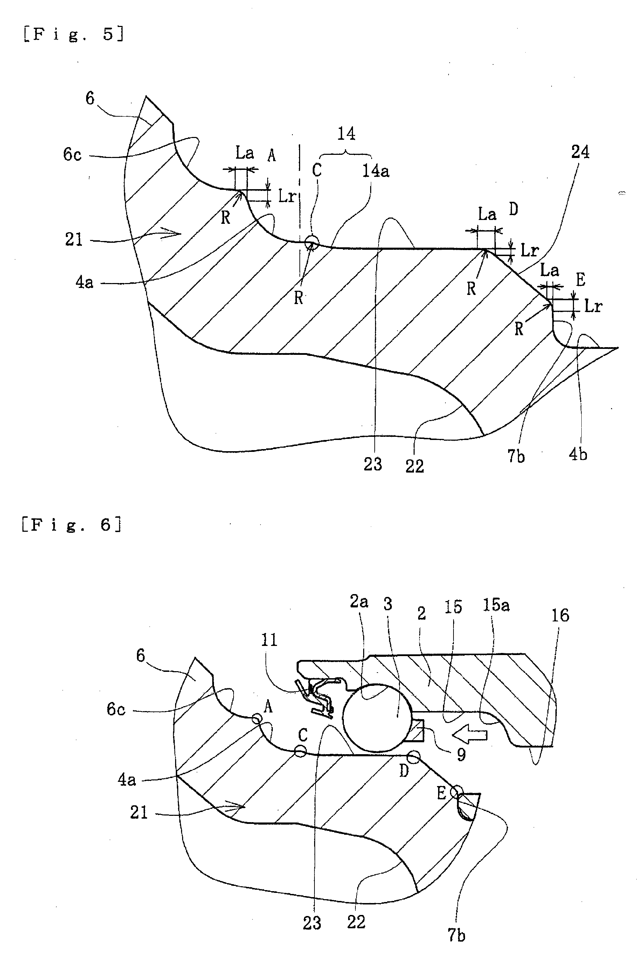

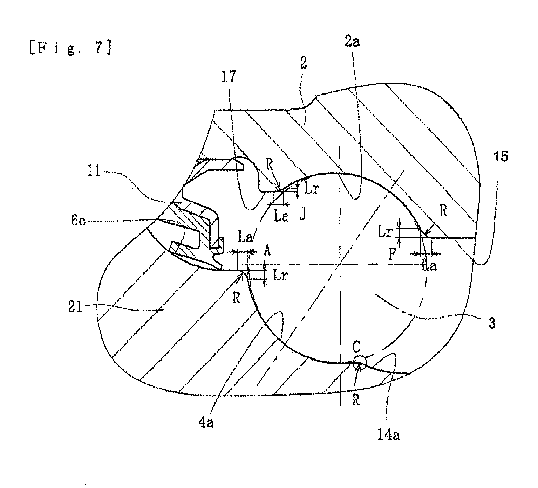

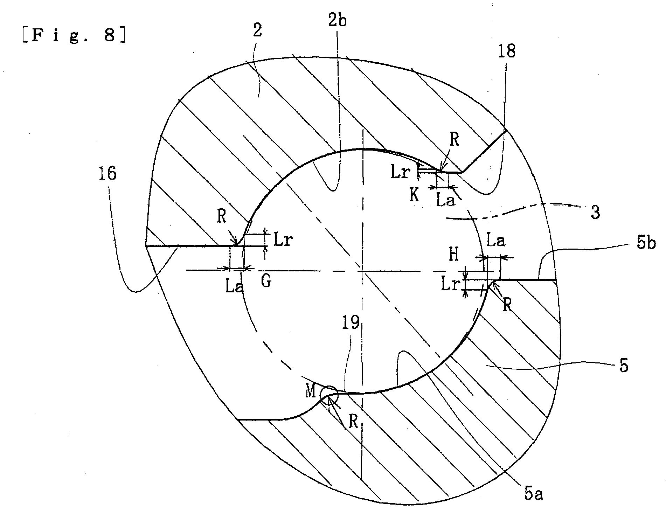

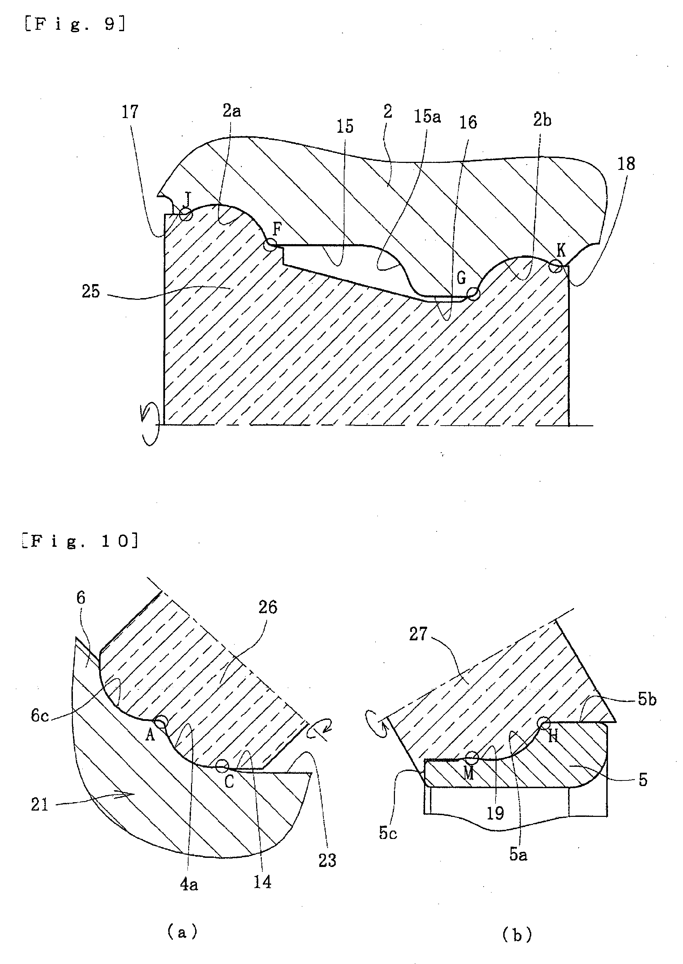

Fig. 4 is a longitudinal section view showing a second embodiment of the bearing apparatus for a wheel of vehicle of the present invention, Fig. 5 is an enlarged sectional view of the hub wheel of Fig. 4, Fig. 6 is an enlarged sectional view of a condition during assembly of the inner side ball group onto the inner raceway surfaces of the hub wheel, Fig. 7 is an enlarged sectional view of the bearing row of outer side of Fig. 4, Fig. 8 is an enlarged sectional view of the bearing row of inner side of Fig. 4, Fig. 9 is an explanatory view showing a grinding work applied to the outer member after heat treatment thereof, Fig. 10 (a) is an explanatory view showing a grinding work applied to the hub wheel after heat treatment thereof, and Fig. 10 (b) is an explanatory view showing a grinding work applied to the inner ring after heat treatment thereof. Since the second embodiment is different from the first embodiment only in the structure of the hub wheel, same reference numerals are used herein for designating same parts as those having same functions used in the first embodiment.

This bearing apparatus is a third generation type used for a driven wheel and comprises an inner member 20, an outer member 2, and double row ball groups 3, 3 freely rollably contained between the outer and inner members 20, 2. The inner member 20 comprises a hub wheel 21, and the inner ring 5 press fitted onto the hub wheel 21 via a predetermined interference.

The hub wheel 21 is made of medium carbon steel including carbon of 0.40~0.80%by weight such as S53C and formed with a recess 22. The recess 22 is provided at the outer side end portion of the hub wheel 21 and is deeper than the recess 13 of the first embodiment (shown by a phantom line). The depth of recess 22 extends to a position near a stepped portion 24 beyond the bottom of the inner raceway surface 4a so that the wall thickness of the outer side end portion of the hub wheel 21 becomes substantially constant. Due to the fact PCDo>PCDi, the diameter of the inner raceway surface 4a of the hub wheel 21 is larger than that of the inner raceway surface 5a of the inner ring 5 and the outer diameter of the shaft shaped portion 23 is set so --that it has larger diameter than the bottom diameter of the inner raceway surface 5a of the inner ring 5.

Similarly to the first embodiment the bearing apparatus of the second embodiment has a large bearing rigidity at the outer side than at the inner side. In addition since the depth of the recess 22 in the second embodiment is larger than that of the recess 13 in the first embodiment, reduction of weight of the bearing apparatus can be further promoted.

Also in this embodiment each of the corner portions on the outer circumferential surface of the hub wheel 21 is rounded as having a smooth circular arc. That is, as shown in an enlarged view of Figs. 5, a corner (transition) A between the base portion 6c and the outer side inner raceway surface 4a, a corner D between the tapered stepped portion 24 and the shaft shaped portion 23, and a corner E between the stepped portion 24 and the shoulder 7b are formed as having a predetermined chamfered configuration having a corner radius R. More particularly each of the corners D, E is formed so that it has the axial chamfer dimension La of 0.5~5 mm and the radial chamfer dimension Lr of 0.5~5 mm, and the corner radius R of 1.0~10 R to have smooth transition portions.

Since the corner portions A, C, D, E on the outer circumferential surface of the hub wheel 21 are rounded, it is possible to suppress generation of damages on the balls 3 during assembling step of the bearing apparatus although the outer side balls 3 would contact the corners A, C, D, E of the hub wheel 21 and thus to improve the noise characteristics and the life of the bearing apparatus.

Also in this embodiment each of the corner A between the raceway surface 4a and the base portion 6c, corners F, G at the shoulders 15, 16 of the outer member 2, and a corner H on the outer circumferential surface 5b of the inner ring 5 is rounded as having a smooth circular arc, and each of the counter portions 17, 18 of the outer member 2, corners J, K on the outer raceway surfaces 2a, 2b, and a corner M of a counter portion 19 is also rounded as having a smooth circular arc. The counter portions 17, 18, 14, 19 axially correspond to the shoulder portions 15, 16, 6c, 5b respectively of each raceway surface. More particularly as shown in enlarged views of Figs. 7 and 8, the axial chamfer dimension La is 0.15~0.8 mm, preferably 0.15~0.3 mm, and the radial chamfer dimension Lr is 0.15~0.8 mm, preferably 0.15~0.3 mm, and the corner radius R is 0.15~2.0 R, preferably 0.45~0.7 R in order to have smooth transition portions.

As shown in Figs. 9 and 10, the corner portions A, F, G, H of shoulders and the corner portions C, J, K, M of the counter portions are ground simultaneously with the raceway surfaces after heat treatment by formed grinding wheels 25, 26, 27. That is, as shown in Fig. 9, the double row outer raceway surfaces 2a, 2b of the outer member 2 are ground together by the formed grinding wheel 25 and the corners F, G of the shoulders 15, 16 and the corner portions J, K of the counter portions 17, 18 are also simultaneously ground by the formed grinding wheel 25. Also as shown in Fig. 10 (a) the base portion 6c forming the seal-land portion of the wheel mounting flange 6 and the inner raceway surface 4a are ground by the formed grinding wheel 26 and simultaneously the corner A of the shoulder 6c and the corner C of the counter portion 14 are also ground by this formed grinding wheel 26. Concerning to the inner ring 5, the inner raceway surface 5a, the outer circumferential surface 5b onto which the encoder 12 is press fitted and the end face 5c of smaller diameter side are ground by the formed grinding wheel 27 and simultaneously the corner H on the outer circumferential surface 5b and the corner M of the counter portion 19 are ground by the same formed grinding wheel 27 as shown in Fig. 10 (b).

As described above since the corners A, F, G, H of shoulders and the corners C, J, K, M of the counter portions are ground together by the formed grinding wheel 25, 26, 27 simultaneously with the outer and inner raceway surfaces 4a, 2a, 2b, 5a and rounded as each corner having a smooth circular arc, it is possible to suppress generation of "edge load" even though the oval contacting region formed by contact between each of the raceway surfaces 4a, 2a, 2b, 5a and the ball 3 rides over the each corner. Accordingly it is possible to provide a bearing apparatus which can prevent generation, of damages on the balls and thus improve its life, noise characteristics and reliability in addition to its high rigidity.

Although it is described that the outer diameter "d" of each ball 3 is same, balls having different diameters may be used in each row of balls. For example the diameter of each ball arranged at the outer side may be smaller than that of each ball arranged at the inner side to increase the number of ball in the outer side row.

### Third embodiment

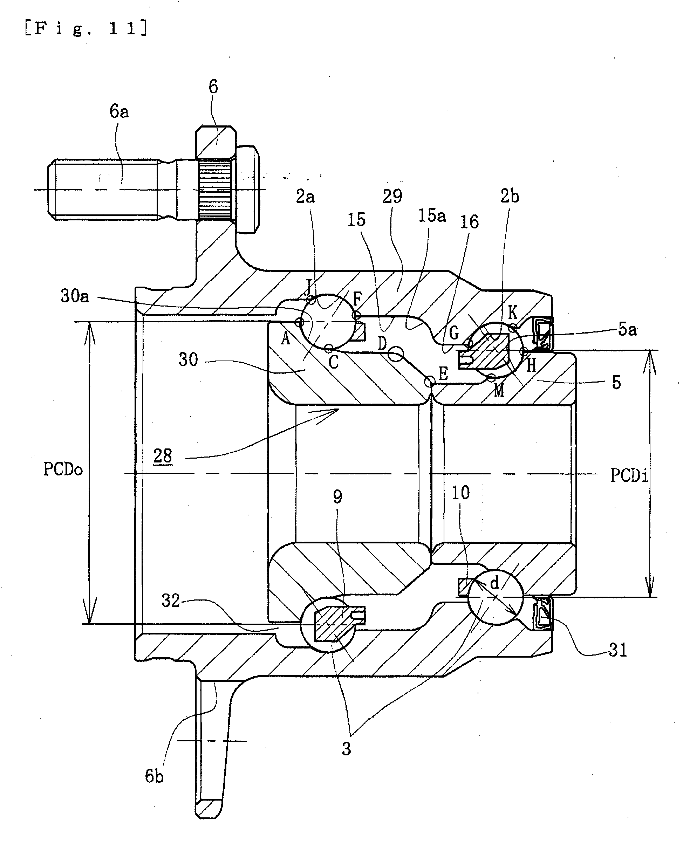

Fig. 11 is a longitudinal section view showing a third embodiment of the bearing apparatus for a wheel of vehicle of the present invention, Same reference numerals are used herein for designating same parts as those having same functions used in the previous embodiments.

This bearing apparatus is a second generation type used for a driven wheel and comprises an inner member 28, an outer member 29, and double row balls 3, 3 freely rollably contained between the outer and inner members 28, 29. The inner member 28 comprises a pair of inner rings 30, 5 formed on their outer circumferential surfaces with inner raceway surfaces 30a, 5a.

The outer member 29 is made of medium carbon steel including carbon of 0.40~0.80% by weight such as S53C and integrally formed on its outer circumferential surface with a wheel mounting flange 6 and on its inner circumferential surface with double row outer raceway surfaces 2a, 2b. The double row ball groups 3, 3 are rollably contained between the outer and inner raceway surfaces by cages 9, 10 and forms a back-to-back double row angular contact ball bearing. A seal 31 is mounted on the inner side end portion of the outer member 29 and a labyrinth seal 32 is formed between the outer side end and the inner ring 30. These seals 32 and a cap (not shown) covering the opened end of the outer member 29 prevent leakage of grease contained in the bearing and entering of rain water and dusts into the bearing from outside.

Similarly to the previous embodiments a pitch circle diameter PCDo of the outer side ball group 3 is set larger than a pitch circle diameter PCDi of the inner side ball group 3. The diameter "d" of each ball 3 is same both in the outer side and inner side and thus the number of the ball group 3 in the outer side is larger than that of the ball group 3 in the inner side because of the fact PCDo>PCDi. Due to the fact PCDo>PCDi, the diameter of the outer raceway surface 30a of the outer side inner ring 30 is larger than that of the inner raceway surface 5a of the inner side inner ring 5.

Also similarly to the previous embodiment, since a pitch circle diameter of the outer side ball group is set larger than that of the inner side ball group, it is possible to extend the life of the bearing. In addition since the corners A, F, G, H of the shoulders and the corners C, J, K, M of the counter portions are rounded and formed as smooth circular arcs, it is possible to suppress damages of balls 3 caused by their contact or vibration during assembly of the bearing apparatus.

### Applicability in Industries

The bearing apparatus for a wheel of vehicle of the present invention can be applied to any of the bearing apparatus of the first-fourth generations irrespective for the driving wheel or the driven wheel.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the claims.

### BRIEF DESCRIPTION OF THE DRAWINGS

Fig. 1 is a longitudinal section view showing a first embodiment of the bearing apparatus for a wheel of vehicle of the present invention;
Fig. 2 is an enlarged sectional view of the hub wheel of Fig. 1;
Fig. 3 is an enlarged sectional view of a condition during assembly of the inner side ball group onto the inner raceway surfaces of the hub wheel;
Fig. 4 is a longitudinal section view showing a second embodiment of the bearing apparatus for a wheel of vehicle of the present invention;
Fig. 5 is an enlarged sectional view of the hub wheel of Fig. 4;
Fig. 6 is an enlarged sectional view of a condition during assembly of the inner side ball group onto the inner raceway surfaces of the hub wheel;
Fig. 7 is an enlarged sectional view of the bearing row of outer side of Fig. 4;
Fig. 8 is an enlarged sectional view of the bearing row of inner side of Fig. 4;
Fig. 9 is an explanatory view showing a grinding work applied to the outer member after heat treatment thereof;
Fig. 10 (a) is an explanatory view showing a grinding work applied to the hub wheel after heat treatment thereof, and
Fig. 10 (b) is an explanatory view showing a grinding work applied to the inner ring after heat treatment thereof;
Fig. 11 is a longitudinal section view showing a third embodiment of the bearing apparatus for a wheel of vehicle of the present invention; and
Fig. 12 is a longitudinal section view showing a bearing apparatus for a wheel of vehicle of the prior art.

**Description of the Symbols**

| | |
|---|---|
| 1, 20, 28 | inner member |
| 2, 29 | outer member |
| 3 | balls |
| 4, 21 | hub wheel |
| 4a, 5a, 30a | inner raceway surfaces |
| 4b | cylindrical portion |
| 5, 30 | inner rings |
| 5b | outer circumferential surface |
| 5c | end face of smaller diameter side |
| 6 | wheel mounting flange |
| 6a | hub bolts |
| 6b | circular apertures |
| 6c | base portion |
| 7, 23 | shaft shaped portion |
| 7a, 15a, 24 | stepped portion |
| 7b, 15, 16 | shoulder |
| 8 | caulked portion |
| 9, 10 | cages |
| 11, 31 | seal |
| 12 | magnetic encoder |
| 13, 22 | recess |
| 14, 17, 18, 19 | counter portion |
| 14a | smaller diameter portion |
| 25, 26, 27 | formed grinding wheel |
| 32 | labyrinth seal |
| 50 | bearing apparatus |
| 51 | outer member |
| 51a | outer raceway surface |
| 51b | inner side outer raceway surface |
| 51c | body mounting flange |
| 52 | hub wheel |
| 52a, 54a | inner raceway surface |
| 52b | cylindrical portion |
| 52c | caulked portion |
| 53 | wheel mounting flange |
| 54 | inner ring |
| 55 | inner member |
| 56 ,57 | balls |
| 58, 59 | cages |
| 60, 61 | seals |
| 62 | stepped portion |
| 63, 64 | counter portion |
| A, F, G, H | corner portions of shoulders |
| B, D, E | corner portions |
| C, J, K, M | corner portions of the counter portions |
| D1 | pitch circle diameter of the outer side ball group |
| D2 | pitch circle diameter of the inner side ball group |
| d | outer diameter of each ball |
| La | axial chamfer dimension |
| Lr | radial chamfer dimension |
| PCDo | pitch circle diameter of the outer side ball group |
| PCDi | pitch circle diameter of the inner side ball group |
| R | corner radius |

## Claims

1. A double row angular ball bearing apparatus for a wheel of vehicle comprising an outer member (2, 29) formed on its inner circumferential surface with double row outer raceway surfaces (2a, 2b); inner members (1, 20, 28) each formed on its outer circumferential surface with double row inner raceway surfaces (4a, 5a, 30a) oppositely arranged to the double row outer raceway surfaces (2a, 2b); and double row ball groups (3) freely rollably contained between the outer raceway surfaces (2a, 2b) and inner raceway surfaces (4a, 5a, 30a) of the inner members (1, 20, 28) and the outer member (2, 30), wherein a pitch circle diameter (PCDo) of a ball group (3) of the outer side is larger than a pitch circle diameter (PCDi) of a ball group (3) of the inner side, **characterized in that** each of corner portions (A, B, C, D, E, H, M) of the outer circumferential surfaces of the inner member (1, 20, 28) is rounded as a smooth circular arc, that each of corner portions (C, J, K, M) of counter portions (14, 17, 18, 19) of the outer and inner raceway surfaces is rounded as a smooth circular arc, and that a counter portion (14) is formed near the bottom of the inner raceway surface (4a) of the hub wheel (4) and has a predetermined width and a diameter larger than that of the bottom of said inner raceway surface (4a).

2. A double row angular ball bearing apparatus for a wheel of vehicle of claim 1 wherein each of corner portions (A, F, G, H) of shoulders of the outer and inner raceway surfaces is rounded as a smooth circular arc.

3. A double row angular ball bearing apparatus for a wheel of vehicle of claim 1 or 2 wherein the outer diameter of each ball (3) is same, and the number of ball group (3) at the outer side is larger than that of a ball group (3) at the inner side.

4. A double row angular ball bearing apparatus for a wheel of vehicle of any one of claims 1-3 wherein said inner member (1, 20) comprises a hub wheel (4, 21) having a wheel mounting (6) formed integrally therewith at one end thereof, one inner raceway surface (4a) formed on the outer circumferential surface thereof oppositely to one (2a) of the double row outer raceway surfaces (2a, 2b), and a cylindrical portion (4b) axially extending from the inner raceway surface (4a), and further comprises an inner ring (5) fitted on the cylindrical portion (4b) and formed on its outer circumferential surface with the other inner raceway surface (5a) oppositely to the other raceway surface (2b) of the double row outer raceway surfaces (2a, 2b); and wherein a substantially conical recess (13 or 22) is formed at an outer side end portion of the hub wheel (4), and the depth of the recess (13) extends to at least near the bottom of the inner raceway surface (4a) of the hub wheel (4) so that the outer side end portion of the hub wheel (4) has a substantially constant wall thickness.

5. A double row angular ball bearing apparatus for a wheel of vehicle of claim 4 wherein a shaft shaped portion (23) is formed so that it extends from the bottom of the inner raceway surface (4a) of the hub wheel (21) toward the cylindrical portion (4b), and a tapered stepped portion (24) is formed between the shaft shaped portion (23) and a shoulder (7b) to which the inner ring (5) is abutted, and wherein the depth of the recess (22) extends to near the stepped portion (24) beyond the bottom of the inner raceway surface (4a).

6. A double row angular ball bearing apparatus for a wheel of vehicle of any one of claims 1-5 wherein a ratio (d/PCDi) of the outer diameter (d) of each ball (3) to a pitch circle diameter (PCDi) of a ball group (3) at the inner side is set in a range 0.14≤(d/PCDi)≤0.25.

7. Method of manufacturing a double row angular ball bearing apparatus for a wheel of vehicle of any one of claims 1-6 wherein the corner portions (A, B, D, E, F, G, H; and C, J, K, M) respectively of the shoulders and the counter portions are ground simultaneously with the inner and outer raceway surface after heat treatment by a formed grinding wheel (25, 26, 27).

## Patentansprüche

1. Zweireihige Schrägkugellagervorrichtung für ein Rad eines Fahrzeugs, umfassend ein äußeres Element (2, 29), das auf seiner Innenumfangsfläche mit zweireihigen äußeren Laufbahnflächen (2a, 2b) ausgebildet ist; innere Elemente (1, 20, 28), die jeweils auf ihrer Außenumfangsfläche mit zweireihigen inneren Laufbahnflächen (4a, 5a, 30a) ausgebildet sind, die den zweireihigen äußeren Laufbahnflächen (2a, 2b) gegenüberliegend angeordnet sind; und zweireihige Kugelgruppen (3), die frei rollfähig zwischen den äußeren Laufbahnflächen (2a, 2b) und inneren Laufbahnflächen (4a, 5a, 30a) der inneren Elemente (1, 20, 28) und des äußeren Elements (2, 30) enthalten sind, wobei ein Teilkreisdurchmesser (PCDo) einer Kugelgruppe (3) der Außenseite größer als ein Teilkreisdurchmesser (PCDi) einer Kugelgruppe (3) der Innenseite ist, **dadurch gekennzeichnet, dass** jeder der Eckenabschnitte (A, B, C, D, E, H, M) der Außenumfangsflächen des inneren Elements (1, 20, 28) als ein sanfter Kreisbogen abgerundet ist, dass jeder der Eckenabschnitte (C, J, K, M) der Gegenabschnitte (14, 17, 18, 19) der äußeren und inneren Laufbahnflächen als ein sanfter Kreisbogen abgerundet ist, und dass ein Gegenabschnitt (14) in der Nähe des Bodens der inneren Laufbahnflächen (4a) der Radnabe (4) ausgebildet ist und eine vorbestimmte Breite und einen Durchmesser, der größer als derjenige des Bodens der inneren Laufbahnfläche (4a) ist, aufweist.

2. Zweireihige Schrägkugellagervorrichtung für ein Rad eines Fahrzeugs nach Anspruch 1, wobei jeder der Eckenabschnitte (A, F, G, H) der Schultern der äußeren und inneren Laufbahnflächen als ein sanfter Kreisbogen abgerundet ist.

3. Zweireihige Schrägkugellagervorrichtung für ein Rad eines Fahrzeugs nach Anspruch 1 oder 2, wobei der Außendurchmesser jeder Kugel (3) gleich ist und die Anzahl der Kugelgruppe (3) an der Außenseite größer als jene einer Kugelgruppe (3) an der Innenseite ist.

4. Zweireihige Schrägkugellagervorrichtung für ein Rad eines Fahrzeugs nach einem der Ansprüche 1-3, wobei das innere Element (1, 20) eine Radnabe (4, 21) umfasst, die einen an einem Ende derselben einstückig mit ihr ausgebildeten Radträger (6), eine innere Laufbahnflächen (4a), die auf der Außenumfangsfläche derselben gegenüber einer (2a) von den zweireihigen äußeren Laufbahnflächen (2a, 2b) ausgebildet ist, und einen zylindrischen Abschnitt (4b), der sich von der inneren Laufbahnflächen (4a) aus axial erstreckt, aufweist, und ferner einen Innenring (5) umfasst, der auf dem zylindrischen Abschnitt (4b) angebracht ist und auf seiner Außenumfangsfläche mit der anderen inneren Laufbahnfläche (5a) gegenüber der anderen Laufbahnfläche (2b) von den zweireihigen äußeren Laufbahnflächen (2a, 2b) ausgebildet ist; und wobei eine im Wesentlichen konische Vertiefung (13 oder 22) an einem außenseitigen Endabschnitt der Radnabe (4) ausgebildet ist und die Tiefe der Vertiefung (13) sich bis mindestens in die Nähe des Bodens der inneren Laufbahnflächen (4a) der Radnabe (4) erstreckt, so dass der außenseitig Endabschnitt der Radnabe (4) eine im Wesentlichen konstante Wanddicke aufweist.

5. Zweireihige Schrägkugellagervorrichtung für ein Rad eines Fahrzeugs nach Anspruch 4, wobei ein wellenförmiger Abschnitt (23) so ausgebildet ist, dass er sich vom Boden der inneren Laufbahnflächen (4a) der Radnabe (21) aus in Richtung des zylindrischen Abschnitts (4b) erstreckt, und ein sich stufenförmig verjüngender Abschnitt (24) zwischen dem welenförmigen Abschnitt (23) und einer Schulter (7b) ausgebildet ist, an welche der Innenring (5) anstößt, und wobei sich die Tiefe der Vertiefung (22) bis in die Nähe des sich stufenförmig verjüngenden Abschnitts (24) über den Boden der inneren Laufbahnflächen (4a) hinaus erstreckt.

6. Zweireihige Schrägkugellagervorrichtung für ein Rad eines Fahrzeugs nach einem der Ansprüche 1-5, wobei ein Verhältnis (d/PCDi) des Außendurchmessers (d) jeder Kugel (3) zu einem Teilkreisdurchmesser (PCDi) einer Kugelgruppe (3) an der Innenseite in einem Bereich 0,14 ≤ (d/PCDi) ≤ 0,25 eingestellt ist.

7. Verfahren zur Herstellung einer zweireihigen Schrägkugellagervorrichtung für ein Rad eines Fahrzeugs nach einem der Ansprüche 1-6, wobei die Eckenabschnitte (A, B, D, E, F, G, H; und C, J, K, M) der Schultern bzw. der Gegenabschnitte gleichzeitig mit der inneren und der äußeren Laufbahnfläche nach einer Wärmebehandlung mit einer geformten Schleifscheibe (25, 26, 27) geschliffen werden.

## Revendications

1. Dispositif de roulement à billes angulaire en double rangée pour une roue d'un véhicule comprenant un élément extérieur (2, 29) formé sur sa surface circonférentielle interne avec des surfaces de chemin de roulement externes (2a, 2b) en double rangée ; des éléments internes (1, 20, 28) formés chacun sur sa surface circonférentielle externe avec des surfaces de chemin de roulement internes en double rangée (4a, 5a, 30a) disposées à l'opposé des surfaces de chemin de roulement externes à double rangée (2a, 2b) ; et des groupes de billes en double rangée (3) roulant librement contenus entre les surfaces de chemins de roulement externes (2a, 2b) et les surfaces de chemins de roulement internes (4a, 5a, 30a) des éléments internes (1,20,28) et de l'élément externe (2, 30), dans lequel un diamètre de cercle primitif (PCDo) d'un groupe de billes (3) du côté externe est plus grand qu'un diamètre de cercle primitif (PCDi) d'un groupe de billes (3) du côté interne, **caractérisé en ce que** chacune des portions de coin (A, B, C, D, E, H, M) des surfaces circonférentielles externes de l'élément interne (1, 20, 28) est arrondie comme un arc circulaire lisse, **en ce que** chacune des portions de coin (C, J, K, M) des portions opposées (14, 17, 18, 19) des surfaces de chemin de roulement externe et interne est arrondie comme un arc circulaire lisse, et **en ce que** une portion opposée (14) est formée près de la base de la surface de chemin de roulement interne (4a) du moyeu de roue (4) et possède une largeur prédéterminée et un diamètre plus grand que celui de la base de ladite surface de chemin de roulement interne (4a).

2. Dispositif de roulement à billes angulaire en double rangée pour une roue de véhicule selon la revendication 1, dans lequel chacune des portions de coin (A, F, G, H) des épaulements des surfaces de chemin de roulement externe et interne est arrondie comme un arc circulaire lisse.

3. Dispositif de roulement à billes angulaire en double rangée pour une roue de véhicule selon les revendications 1 ou 2, dans lequel le diamètre externe de chaque bille (3) est identique, et le nombre de groupes de billes (3) du côté externe est plus grand que celui de groupes de billes (3) du côté interne.

4. Dispositif de roulement à billes angulaire en double rangée pour une roue de véhicule selon une quelconque des revendications 1 à 3, dans lequel ledit élément interne (1, 20) comprend un moyeu de roue (4, 21) ayant une monture de roue (6) formée en un seul tenant avec celui-ci à une extrémité de celui-ci, une surface de chemin de roulement interne (4a) formée sur la surface circonférentielle externe de celui-ci opposée à une (2a) des surfaces de chemin de roulement externes en double rangée (2a, 2b), et une portion cylindrique (4b) s'étendant axialement à partir de la surface de chemin de roulement interne (4a), et comprend en outre un anneau interne (5) ajusté sur la portion cylindrique (4b) et formé sur sa surface circonférentielle externe avec l'autre surface de chemin de roulement interne (5a) opposée à l'autre surface de chemin de roulement (2b) des surfaces de chemin de roulement externes en double rangée (2a, 2b) ; et dans lequel un évidement substantiellement conique (13 ou 22) est formé sur une portion d'extrémité latérale externe du moyeu de roue (4), et le profondeur de l'évidement (13) s'étend au moins près de la base de la surface de chemin de roulement interne (4a) du moyeu de roue (4) de sorte que la portion d'extrémité latérale externe (4a) du moyeu de roue (4) ait une épaisseur de paroi substantiellement constante.

5. Dispositif de roulement à billes angulaire en double rangée pour une roue de véhicule selon la revendication 4, dans lequel une portion en forme d'arbre (23) est formée de sorte qu'elle s'étend à partir de la base de la surface de chemin de roulement interne (4a) du moyeu de roue (21) vers la portion cylindrique (4b), et une portion étagée effilée (24) est formée entre la portion en forme d'arbre (23) et un épaulement (7b) sur lequel l'anneau interne (5) vient buter, et dans lequel la profondeur de l'évidement (22) s'étend vers la portion étagée (24) au-delà de la base de la surface de chemin de roulement interne (4a).

6. Dispositif de roulement à billes angulaire en double rangée pour une roue de véhicule selon une quelconque des revendications 1 à 5, dans lequel un rapport (d/PCDi) du diamètre externe (d) de chaque bille (3) sur un diamètre de cercle primitif (PCDi) d'un groupe de billes (3) du côté interne est réglé dans une plage de 0.14 ≤ (d/PCDi) ≤ 0.25.

7. Procédé de fabrication d'un dispositif de roulement à billes angulaire en double rangée pour une roue de véhicule selon une quelconque des revendications 1 à 6, dans lequel les portions de coin (A, B, D, E, F, G, H ; et C, J, K, M) respectivement des épaulements et des portions opposées sont ancrées simultanément dans les surfaces de chemins de roulement internes et externes après un traitement thermique par une meule à rectifier formée (25, 26, 27).
